# EUROPÄISCHE PATENTSCHRIFT

(11) **EP 0 846 590 B1**
(45) Veröffentlichungstag und Bekanntmachung des Hinweises auf die Patenterteilung: **10.04.2002**
(21) Anmeldenummer: 97119256.2
(22) Anmeldetag: 04.11.1997
(51) Int. Cl.: B60L 15/20, B60L 11/12

(54) **Verfahren zur Regelung des Schleppmomentes in einem dieselelektrischen Antriebssystem und Antriebssystem**
Slipmoment control method in a Diesel-electric traction system and traction system
Procédé de réglage du moment du couple dans une système de traction Diesel-électrique et système de traction

(30) Priorität: 06.12.1996 DE 19650570
(43) Veröffentlichungstag der Anmeldung: 10.06.1998
(73) Patentinhaber: Voith Turbo GmbH & Co. KG, 89522 Heidenheim (DE)
(72) Erfinder: Dietzel, Bernd, 89428 Syrgenstein (DE)
(74) Vertreter: Dr. Weitzel & Partner

(56) Entgegenhaltungen:
- DE-A- 19 523 985
- DE-C- 4 435 613

## Beschreibung

Die Erfindung betrifft ein Verfahren zur Regelung des Schleppmomentes in einem Fahrzeug im Einzelnen mit den Merkmalen aus dem Oberbegriff des Anspruches 1 (vgl. DE 195 23 985 A) ferner ein Antriebssystem gemäß Oberbegriff des Anspruchs 18 (vgl. DE 44 35 613 C).

Erläuterungen für nachfolgend einheitlich verwendete Begriffe :
- Antriebsleistung P_{AM:}: von der Verbrennungskraftmaschine erzeugte Leistung
- Antriebsmoment M_{AR}:: an den anzutreibenden Rädern erzeugtes Moment
- Fahrmoment M_{Fahr}:: Moment, welches bei entlastetem Fahrhebel-oder pedal bei rollendem Fahrzeug aufgrund von dessen kinetischer Energie am Rad wirksam und in den Antriebsstrang eingeleitet wird
- Schleppmoment M_{Skonv}:: Moment, welches zur Überwindung der Gesamtheit der Widerstände im Antriebsstrang mit im wesentlichen mechanischer Leistungsübertragung dem Fahrmoment entgegenwirkt; dazu zählen insbesondere die innere Reibung der Verbrennungskraftmaschine, des Getriebes.

Konventionell aufgebaute Antriebsstränge von Fahrzeugen umfassen wenigstens eine Antriebsmaschine, insbesondere eine Verbrennungskraftmaschine, sowie Drehmomentenübertragungs- und Wandlungseinrichtungen, welche mit dem Abtrieb gekoppelt sind. Im allgemeinen ist die Verbrennungskraftmaschine über eine Kupplung mit einem Getriebe koppelbar, dessen Ausgang wenigstens mittelbar über weitere leistungsübertragende Bauelemente mit den Antriebsrädern in Verbindung stehen kann. Der Wunsch des Fahrers nach Beschleunigung des Fahrzeuges ist über eine Betätigungseinrichtung, welche beispielsweise als Fahrhebel-oder Pedal ausgeführt sein kann, realisierbar. Die Betätigungseinrichtung wiederum ist wenigstens mittelbar mit dem Leistungsstellglied der Antriebsmaschine gekoppelt.

Im Normalbetrieb erfolgt der Antrieb der Räder durch Leistungsübertragung von der Antriebsmaschine über die Kupplung und das Getriebe auf die Antriebsräder. Dabei kann jedoch nicht die gesamte von der Verbrennungskraftmaschine erzeugte Leistung an die Antriebsräder übertragen werden. Ein erster Leistungsanteil der von der Verbrennungskraftmaschine erzeugten Leistung ist dabei für die Überwindung der dem Gesamtsystem anhaftenden Widerstände, insbesondere der inneren Widerstände von Verbrennungskraftmaschine und der leistungsübertragenden Bauelemente erforderlich. Nur der weitere zweite Leistungsanteil kann dann zur Beschleunigung oder dem Halten einer bestimmten Geschwindigkeit des Fahrzeuges genutzt werden.

Die Betätigungseinrichtung ist im allgemeinen direkt mit dem Leistungsstellglied der Verbrennungskraftmaschine gekoppelt. Der Fahrer kann damit seinen Wunsch nach Beschleunigung oder Halten einer bestimmten Geschwindigkeit zum Ausdruck bringen. Gibt der Fahrer das Fahrpedal oder den Fahrhebel ganz frei, erfolgt eine Verstellung am Leistungsstellglied derart, daß außer dem ersten Leistungsanteil zur Aufrechterhaltung des Leerlaufbetriebes kein zusätzlicher zweiter Leistungsanteil mehr erzeugt wird. Bei Fahrt in der Ebene hat dies zur Folge, daß kein Antriebsmoment von der Antriebsmaschine mehr auf die Antriebsräder übertragen wird. An den Antriebsrädern ist jedoch ein Fahrmoment wirksam. Das ist das Moment, welches bei entlastetem Fahrpedal- oder Hebel bei rollendem Fahrzeug aufgrund von dessen kinetischer Energie am Rad wirksam und in den Antriebsstrang eingeleitet wird. Ein Teil des an den Rädern wirkenden Fahrmomentes wird in den Antriebsstrang eingeleitet, welcher einen Antrieb der Antriebsmaschine von der Abtriebsseite, d.h. den Rädern, her bewirkt. Diesem ist das durch die Widerstände im Antriebsstrang bestimmte Schleppmoment entgegengerichtet. Je nach Größe der kinetischen Energie des Fahrzeuges kann das in den Antriebsstrang eingeleitete Moment dazu dienen, die Antriebsmaschine in den Schiebebetrieb zu bringen, was sich jedoch in einer Verminderung der kinetischen Energie des Fahrzeuges, d.h. der Fahrgeschwindigkeit niederschlägt. Insbesondere bei Fahrt im Gefälle und der Freigabe der Betätigungseinrichtung wird aufgrund der durch die Wirkung der Hangabtriebskraft erfolgenden Zunahme der kinetischen Energie des Fahrzeuges mit Zunahme des Fahrmomentes eine Zunahme des dem Fahrmoment entgegenwirkenden Schleppmomentes verzeichnet. Die Antriebsmaschine wird geschleppt, d.h. in den Schub- bzw. Schiebebetrieb gebracht. Der zunehmende Leistungsanteil, der zum Antrieb der Verbrennungskraftmaschine erforderlich ist, bewirkt ein Absenken der Fahrgeschwindigkeit. Das Fahrzeug wird gebremst. Da im Schiebebetrieb die Antriebsmaschine gänzlich über den Antriebsstrang angetrieben wird, ist eine entsprechend ausgeführte Motorsteuerung vorgesehen, welche die von der Antriebsmaschine verbrauchte Kraftstoffmenge auf Null regelt.

Ein anderes Verhalten zeigen Antriebssysteme mit dieselelektrischen Antriebskonfigurationen. Diese umfassen eine als Dieselmotor ausgeführte Antriebsmaschine, eine mit der Antriebsmaschine mechanisch koppelbare und als Generator betreibbare elektrische Maschine, und wenigstens einen, wenigstens ein Antriebsrad wenigstens mittelbar antreibenden Elektromotor, der mit der elektrischen Maschine elektrisch koppelbar ist. Bei einem dieselelektrischen Antriebssystem ist das auf die Antriebsräder wirkende Schleppmoment, so wie es sich bei einem mechanischen Antriebsstrang einstellt, aufgrund der mechanischen Entkopplung nicht zwangsläufig gegeben. Eine aufgrund des Fahrverhaltens automatische Kraftstoffeinsparung ist nicht möglich, denn die Verbrennungskraftmaschine muß bei Freigabe des Fahrpedals wenigstens noch im Leerlauf betrieben werden.

Der Erfindung liegt deshalb die Aufgabe zugrunde, ein Verfahren zur Beeinflussung bzw. Einregelung des Schleppmomentes eines Fahrzeuges mit einem Antriebssystem, umfassend eine Verbrennungskraftmaschinen-Generator-Anordnung, zu entwickeln, bei welchem ein kraftstoffoptimiertes Fahrverhalten analog dem konventionellen Antriebssystemen mit möglichst einfachen Mitteln und kostengünstig realisiert werden kann. Der konstruktive sowie steuer- bzw. regelungstechnische Aufwand ist gering zu halten.

Die Aufgabe wird durch die Merkmale des Anspruches 1 gelöst. Vorteilhafte Ausgestaltungen sind in den Unteransprüchen wiedergegeben. Die vorrichtungsmäßige Umsetzung ist durch die Merkmale des Anspruches 18 charakterisiert.

Erfindungsgemäß wird bei einem dieselelektrischen Antriebssystem ein Schleppmoment erzeugt und eingestellt, welches immer ausreichend ist, um die Verbrennungskraftmaschine in den Schiebebetrieb zu versetzen und diese mit der zum Auslösen der Schubabschaltung mittels einer entsprechenden, der Verbrennungskraftmaschine zugeordneten Steuerung erforderlichen Drehzahl zu betreiben. Dazu werden die, die Antriebsräder wenigstens mittelbar antreibenden Elektromotoren, welche vorzugsweise als Transversalflußmaschine ausgeführt sind, bei entlastetem Fahrpedal- oder Hebel und/oder bei Betätigung einer Einrichtung zur Aktivierung der Funktion Schleppmomentensteuer- oder Regelung im generatorischen Betrieb betrieben. Im generatorischen Betrieb wird dem Antriebsstrang an den Antriebsrädern Leistung entnommen und der als Verbrennungskraftmaschine ausgebildeten Antriebsmaschine zugeführt. Die Zufuhr erfolgt über die elektrische Kopplung zwischen den als Elektromotoren ausgeführten Radantriebsmotoren und der als Generator betreibbaren und der Verbrennungskraftmaschine nachgeschalteten elektrischen Maschine, dessen Arbeitsweise in diesem Fall zum Zweck des Antriebes der Verbrennungskraftmaschine motorisch erfolgt, zur Antriebsmaschine. Dabei wird jedoch nur ein bestimmter, durch den generatorischen Betrieb der die Antriebsräder wenigstens mittelbar antreibenden Elektromotoren entnehmbarer erster Leistungsanteil genutzt. Dieser Leistungsanteil ist wenigstens immer so groß, daß ein Betreiben der Verbrennungskraftmaschine mit einer Drehzahl, welche gleich oder größer der Leerlaufdrehzahl der Verbrennungskraftmaschine ist, gesichert wird. Die Größe dieser Drehzahl ist dabei von einer der Verbrennungskraftmaschine zugeordneten Steuerung, welche ab Erreichen dieser Drehzahl die Kraftstoffzufuhr unterbricht, abhängig. Diese Drehzahl kann durch die der Verbrennungskraftmaschine zugeordneten Steuerung unveränderbar oder veränderlich festgelegt sein. Wenigstens ein erster Leistungsanteil, der erforderlich ist, um wenigstens den Leerlaufbetrieb zu realisieren, wird somit von den generatorisch betriebenen Elektromotoren an die Verbrennungskraftmaschine abgegeben.

Der Erfinder hat erkannt, daß eine vollständige Nachbildung des Verhaltens eines Fahrzeuges mit konventionellen Antriebsstrang bei dieselelektrischen Antrieben durch Betreiben der als Elektromotoren ausgeführten Antriebsmotoren an den Rädern im Generatorbetrieb, bei welchen ein Schleppmoment gewählt wird, welches stets mit zunehmender Fahrgeschwindigkeit ansteigt, nicht sinnvoll ist. Die dem als Antriebsmotor der Räder fungierenden Elektromotor oder den Antriebsmotoren an den Rädern im generatorischen Betrieb entnommene Leistung kann zwar dazu verwendet werden, um über die als Generator betreibbare elektrische Maschine den Verbrennungsmotor in den Schiebebetrieb zu bringen, wodurch der Kraftstoffverbrauch, der ansonsten erforderlich wäre um den Motor, d.h. die Verbrennungskraftmaschine im Leerlauf betreiben zu können, auf null zurückgehen kann, allerdings besteht ein wesentlicher Nachteil darin, daß der durch den generatorischen Betrieb der Elektromotoren den Antriebsrädern entzogene Leistungsanteil mit zunehmenden Fahrmoment ebenfalls ansteigen würde und damit eine Verringerung der Fahrgeschwindigkeit des Fahrzeuges bewirken. Auch eine andere Möglichkeit - der vollständige Freilauf bei entlastetem Fahrpedal- führt zu keinem tragbaren Ergebnis. Aufgrund der Entkopplung zwischen Antriebsrädern und der Antriebsmaschine wird kein oder nur ein unwesentliches Schleppmoment durch die mit den Rädern gekoppelten Elektromotoren erzeugt. Die Möglichkeit einer sogenannten Schubabschaltung ist dann nicht gegeben. Bei Fahrt im Gefälle hat eine derartige Lösung eine zunehmende Beschleunigung des Fahrzeuges zur Folge, welche der Fahrer nur durch aktive Betätigung weiterer Bremseinrichtungen auszugleichen vermag.

Demgegenüber bietet die erfindungsgemäße Erzeugung eines Schleppmomentes und dessen Steuerung bzw. Regelung die Möglichkeit, bei Freigabe des Fahrpedals- oder Hebels die Verbrennungskraftmaschine immer in den Schiebebetrieb zu versetzen, womit eine Schubabschaltung möglich wird, und damit den Kraftstoffverbrauch zu reduzieren. Durch die erfindungsgemäße Lösung wird bei Fahrten in der Ebene und bei Steigungen dem Antriebsstrang nur die Leistung über die als Generator betreibbaren Elektromotoren entnommen, die gerade ausreicht, um wenigstens noch den Leerlaufbetrieb der Antriebsmaschine zu gewährleisten und die Kraftstofförderung für die Verbrennungskraftmaschine auf null zu bringen, wobei bei Fahrt in der Ebene oder an Steigungen durch die durch die Leistungsversorgung der Verbrennungskraftmaschine begrenzte Verringerung der kinetischen Energie des Fahrzeuges nur unmerkliche Verzögerungen des Fahrzeuges zu verzeichnen sind.

Vorzugsweise sind die die Antriebsräder wenigstens mittelbar antreibenden Elektromotoren und/oder die im generatorischen Betrieb betreibbare elektrische Maschine als Transversalflußmaschinen ausgeführt.

Der Antrieb der Räder erfolgt über wenigstens einen Elektromotor. Dessen erzeugte Leistung kann dann auf beide Räder aufgeteilt werden. Eine Zuordnung jeweils eines Elektromotors zu jeweils einem Rad ist ebenfalls denkbar.

Eine bevorzugte Weiterentwicklung der erfindungsgemäßen Lösung sieht wenigstens für die Fahrt im Gefälle vor, das Schleppmoment derart zu regeln, daß die Fahrzeuggeschwindigkeit auf den zum Zeitpunkt der Entlastung des Fahrpedals gemessenen Wert begrenzt wird. Die Schlepprnomentenregelung ist dabei - zumindest für die Fahrt im Gefälle - Bestandteil der Regelung auf konstante Fahrgeschwindigkeit. Die Fahrzeugsteuerung versucht in diesem Fall, die im Zeitpunkt des Anwählens der Funktion erkannte Geschwindigkeit durch entsprechend dosierten Bremseingriff in die dieser untergeordneten Organe nicht zu überschreiten. D.h. den generatorisch betreibbaren Elektromotoren wird soviel Leistung entzogen, wie neben der Aufrechterhaltung des Leerlaufbetriebes bzw. des Betriebes mit der zur Schubabschaltung erforderlichen Drehzahl zur Verringerung bzw. zum Konstanthalten der Fahrgeschwindigkeit erforderlich ist.

Eine weitere denkbare Möglichkeit besteht darin, nicht die Geschwindigkeit als Führungsgröße zu setzen sondern eine bestimmbar definierte Beschleunigung oder Verzögerung. Beispielsweise kann eine definierte Beschleunigung, die z.B. von der Fahrgeschwindigkeit abhängig sein kann, zugelassen werden.

Eine derartige Lösung stellt eine zunehmende Entlastung des Fahrers dar, insbesondere wird neben einer Zunahme des Bedienkomfortes eine Erhöhung der Fahrsicherheit erzielt. Der steuer- und regelungstechnische Aufwand kann dabei sehr gering gehalten werden, denn es müssen keine zusätzlichen Bremseinrichtungen angesteuert werden.

Vorrichtungsmäßig ist dem Antriebssystem eine Steuer- bzw. Regeleinrichtung zugeordnet. Diese kann Bestandteil einer zentralen Fahrsteuerung sein.
Die Steuer- bzw. Regeleinrichtung umfaßt wenigstens ein Steuergerät, welches wenigstens einen ersten und einen zweiten Eingang und wenigstens einen ersten Ausgang aufweist. Dieser erste Eingang ist mit einer Einrichtung zur wenigstens mittelbaren Erfassung des Betätigungszustandes des Betätigungsorganes zur Vorgabe eines Fahrerwunsches bezüglich einer bestimmten Geschwindigkeit oder Beschleunigung gekoppelt. Das Betätigungsorgan kann beispielsweise in Form eines Fahrpedals- oder Hebels ausgeführt sein. Der zweite Eingang ist mit einer Einrichtung zur Erfassung einer, die aktuelle Fahrgeschwindigkeit wenigstens mittelbar beschreibenden Größe gekoppelt.

In Abhängigkeit wenigstens dieser beiden Eingangsgrößen wird das Schleppmoment im Antriebsstrang gesteuert und eingeregelt. Die den Antriebsrädern durch den generatorischen Betrieb der diese antreibenden Elektromotoren entnommene und an die elektrische Maschine weitergegebene Leistung muß dabei immer so groß sein, daß die der Verbrennungskraftmaschine zugeführte Antriebsleistung ausreicht, diese wenigstens im Leerlauf oder zumindest mit der Drehzahl, ab welcher die Schubabschaltung einsetzt, zu betreiben. Dementsprechend wird am Ausgang des Steuer- bzw. Regelgerätes ein Stellsignal zur Ansteuerung der Versorgung der Verbraucher, hier der Verbrennungskraftmaschine, oder diesen zugeordneten Einheiten, vorzugsweise der elektrischen Kopplung, ausgegeben.

Wenn zusätzlich bei Fahrt im Gefälle eine bestimmte, zum Zeitpunkt der Freigabe des Fahrpedals- oder Hebels anliegende Fahrgeschwindigkeit und/oder definierbare Beschleunigung konstant gehalten werden soll, wird dieser die Funktion eines Sollwertes einer Regelung auf konstante Fahrgeschwindigkeit zugeordnet. Dieser konstant zu haltenden Geschwindigkeit oder Beschleunigung wird in Abhängigkeit weiterer fortlaufend erfaßter Eingangsgrößen - beispielsweise der Neigung - ein bestimmtes Schleppmoment zugeordnet, welches über den generatorischen Betrieb der Elektromotoren dem Fahrmoment entgegengesetzt wird und welches eine Zunahme der Fahrgeschwindigkeit vermeidet Die Schleppmomentenregelung ist in diesem Fall Bestandteil der Regelstrecke einer Regelung zur Einhaltung einer konstanten Fahrgeschwindigkeit für die Fahrt im Gefälle. Die durch den generatorischen Betrieb der Elektromotoren in diesem Fall zusätzlich erzeugte Bremsenergie, welche im wesentlichem durch den zweiten Leistungsanteil bestimmt ist, kann in einer Speichereinheit gespeichert werden.

Weitere Ausgestaltungsmöglichkeiten sehen bei Vorhandensein wenigstens einer weiteren Bremseinrichtung deren Betätigung und Einbeziehung in die Schleppmomentenregelung vor. Diese weitere Bremseinrichtung kann beispielsweise in Form einer mechanischen oder einer hydraulischen Bremseinrichtung ausgeführt sein. Der Betätigung kann dabei der Vorrang vor der Schleppmomentenregelung gewährt werden. Dabei wird bei Betätigung der weiteren Bremseinrichtung entweder vorerst die Schleppmomentenregelung dahingehend außer Betrieb genommen, daß lediglich der Leerlaufbetrieb der Antriebsmaschine aufrechterhalten wird, oder aber die Schleppmomentenregelung wird in ihrer Einstellung zum Zeitpunkt der Betätigung der weiteren Bremseinrichtung belassen. Im letztgenanntem Fall kann dabei das mittels der Schleppmomentenregelung erzeugte Bremsmoment dem entsprechend der Betätigung der weiteren Bremseinrichtung zu erzeugenden Bremsmoment additativ überlagert werden. Die Bremseinrichtung erzeugt dann ein zusätzliches Bremsmoment, welches zu einer Verringerung der Fahrgeschwindigkeit führt. Andere Möglichkeiten der Kombination oder Zuordnung beider Bremsmomente sind denkbar. Die nach Beendigung der Betätigung der weiteren zusätzlichen Bremseinrichtung vorliegende Istgeschwindigkeit wird als neuer Sollwert d.h. als neue Führungsgröße der Regelung gesetzt bzw. gespeichert. Das zu erzeugende Schleppmoment wird dann entsprechend dieser Geschwindigkeit angepaßt und eingeregelt. Dadurch kann dem Fahrer die Bedienung wesentlich erleichtert und sonst erforderliche weitere Anpassungsbrernsungen durch Betätigung beispielsweise eines Fußpedals oder Handhebels zum Halten oder Korrigieren der Geschwindigkeit können entfallen.

Eine andere Ausgestaltungsmöglichkeit besteht darin, beim Anwählen der weiteren Bremseinrichtung eine Maximalauswahl zwischen dem durch die Schleppmomentenregelung erzeugten Bremsmoment und dem mit der weiteren Bremseinrichtung erzeugten Bremsmoment zu treffen.

Das erfindungsgemäße Verfahren der Schleppmomentenregelung als Funktion kann aktiviert werden, wenn der Fahrer das Betätigungsorganbeispielsweise das Fahrpedal oder den Fahrhebel - entlastet und/oder wenn der Fahrer eine Einrichtung betätigt, mittels welcher er seinen Wunsch nach Aktivierung der Schleppmomentenregelung der elektronischen Fahrzeugsteuerung kundtun kann. Eine Deaktivierung dieser Funktion kann mit einer anschließenden Betätigung des Fahrpedals- oder Hebels und/oder einer Deaktivierung der Einrichtung, mittels welcher er seinen Wunsch nach Aktivierung der Schleppmomentenregelung der elektronischen Fahrzeugsteuerung kundtun kann, erfolgen.

Die Aktivierung oder Deaktivierung der Funktion der Schleppmomentenregelung erfolgt vorzugsweise nicht sprungartig bei Betätigung oder Entlastung der Betätigungsorgane bzw. Einrichtungen. Dies kann beispielsweise mittels einer programmierten Funktion realisiert werden, welche einen gleitenden Übergang bezüglich des vorher oder nachher im Antriebstrang herrschenden Antriebsmomentes zu dem Moment, welches die Schleppmomentenregelung erzeugt, erlaubt.

Der gleitende Übergang vom vorher im Antriebsstrang herrschenden Antriebsmoment oder Schleppmoment zum nachher herrschenden Schleppmoment oder Antriebsmoment kann beispielsweise auch derart realisiert werden, daß bereits bei einer bestimmten Winkelstellung des Fahrpedals- oder Hebels, welche ungleich der Endstellung ist, das vom Fahrer gewünschte Antriebsmoment durch Ansteuerung des Leistungsstellgliedes der Verbrennungskraftmaschine null wird. Von dieser bestimmten Winkelstellung an bis zur Endstellung des Fahrpedals- oder Hebels nimmt das von der Schleppmomentenregelung erzeugte Moment kontinuierlich zu. Sinngemäß läuft auch dieser Vorgang beim Deaktivieren der Schleppmomentenregelung, d.h. beispielsweise bei erneutem Betätigen des Fahrpedals oder Hebels, ab. Es besteht dabei die Möglichkeit, die bestimmte Winkelstellung des Fahrpedals- oder Hebels in Abhängigkeit von verschiedenen, den Fahrzustand beeinflussenden Größen, beispielsweise der Fahrgeschwindigkeit, bereits vorzugeben oder bei jeder Betätigung erneut festzulegen. Auch kann eine bestimmte Winkelstellung fest vorgegeben sein, welche beispielsweise durch einen Faktor hinsichtlich ihrer Größe veränderbar ist.

Die Möglichkeit des Nullsetzens des Antriebsmomentes bei einer bestimmten Winkelstellung des Fahrpedals- oder Hebels, welche jedoch ungleich deren Endstellung ist, kann mit der Möglichkeit des Übergangs mittels einer programmierten Funktion kombiniert werden.

Eine andere Variante, den Übergang zur Aktivierung/Deaktivierung der Schleppmomentenregelung nicht sprungartig zu vollziehen, ist dadurch charakterisiert, daß dieser Übergang unter Berücksichtigung der Drehzahl der Verbrennungskraftmaschine vollzogen wird. Die Berücksichtigung der Drehzahl der Verbrennungskraftmaschine erfolgt dabei derart, daß bei einer Drehzahl der Verbrennungskraftmaschine, welche wesentlich über der Leerlauf- bzw. der Drehzahl liegt, die im Schiebebetrieb eine Schubabschaltung auslöst, der Übergang in die Funktion Schleppmomentenregelung verzögert stattfindet.

Es besteht die Möglichkeit, das erfindungsgemäße Verfahren der Schleppmomentenregelung in weitere Regelungen, beispielsweise einer Regelung auf konstante Fahrgeschwindigkeit, einzubeziehen. Dabei kann die Schleppmomentenregelung und die kombinierte Schleppmomentenregelung mit der Betätigung weiterer Bremseinrichtungen auch mit der Geschwindigkeitsbegrenzungsregelung durch Abregeln der Verbrennungskraftmaschine kombiniert werden. Der Vorrang der einzelnen Regelungssysteme kann entsprechend den Einsatzerfordemissen und dem gewünschten Fahrverhalten festgelegt werden,

Die Möglichkeiten der Einstellung eines den Antriebsrädern durch den generatorischen Betrieb der Elektromotoren zu entziehenden Momentes durch Koppelung der Elektromotoren mit einem Verbraucher und deren Realisierung im Einzelnen liegen im Ermessen des Fachmannes, weshalb hier im Detail nicht darauf eingegangen werden muß.

Zusammenfassend stellt es sich als wesentlicher Vorteil der Erfindung dar, daß dem Antriebsstrang in der Ebene und an Steigungen nur die Leistung entzogen wird, die gerade ausreicht, um die Kraftstoff-Förderung für die Verbrennungskraftmaschine auf Null zu bringen. Auf Gefällestrecken wird der Fahrer zusätzlich entlastet, da ein Eingriff in den aktuellen Fahrzustand durch die zusätzliche Betätigung weiterer Bremseinrichtungen entfallen kann. Dies ist vorallem in dem Fall sehr komfortabel, wenn sich der Fahrwiderstand streckenabhängig ändert. Des weiteren ist eine Betätigung zusätzlicher Bremseinrichtungen nicht immer stufenlos möglich.

Die erfindungsgemäße Lösung ist nachfolgend anhand von Figuren erläutert. darin ist folgendes dargestellt:
- Fig. 1: verdeutlicht anhand einer schematischen Darstellung ein dieselelektrisches Antriebssystem;
- Fig. 2: verdeutlicht anhand eines Diagrammes den Schleppmomentenverlauf in Abhängigkeit des Fahrmomentes bei einem Fahrzeug mit konventioneller mechanischer Kopplung zwischen Verbrennungskraftmaschine und Abtrieb;
- Fig. 3a und 3b: verdeutlichen anhand eines Diagrammes den durch die erfindungsgemäße Schleppmomentenregelung erzeugten Schleppmomenten- und Leistungsverlauf in einem dieselelektrischen Antriebssystem;
- Fig. 4a bis 4c: zeigen in vereinfachter Darstellung ein Blockschaltbilder bevorzugter Ausgestaltungen der erfindungsgemäßen Schleppmomentenregelung;
- Fig. 5: verdeutlicht schematisch eine Möglichkeit zur Realisierung des gleitenden Überganges bei Aktivierung und Deaktivierung der Schleppmomentenregelung.

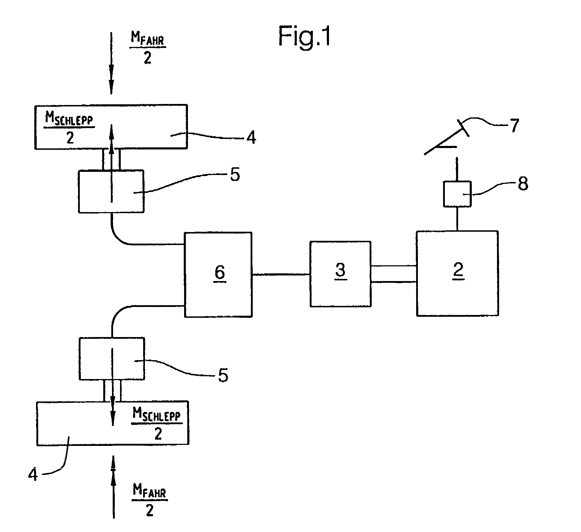

Die Figur 1 verdeutlicht in vereinfachter Darstellung ein dieselelektrisches Antriebssystem und die Leistungsübertragung. Ein Antriebssystem 1 umfaßt wenigstens eine Antriebsmaschine, hier in Form einer als Dieselmotor ausgeführten Verbrennungskraftmaschine 2, eine mit der Verbrennungskraftmaschine 2 mechanisch koppelbare, im Fahrbetrieb als Generator betreibbare, elektrische Maschine 3, wenigstens einen, ein Antriebsrad 4 wenigstens mittelbar antreibenden weiteren Elektromotor 5, der elektrisch mit der als Generator betreibbaren elektrischen Maschine 3 gekoppelt ist. Diese elektrische Kopplung, hier mit 6 bezeichnet, kann beispielsweise über einen Gleichspannungszwischenkreis erfolgen. Die elektrische Maschine 3 und der Elektromotor 5 sind vorzugsweise als Transversalflußmaschine ausgebildet. Der Elektromotor 5 kann wie dargestellt derart angeordnet werden, daß dieser als Direktantrieb für das Antriebsrad 4 fungiert. Es ist jedoch auch eine Leistungsaufteilung über entsprechende Verteilergetriebe auf beide Antriebsräder denkbar.

Im normalen Fahrbetrieb, treibt die Verbrennungskraftmaschine 2 die Antriebsräder 4 an. Die von ihr aufzubringende Leistung P_{AM} setzt sich dabei aus wenigstens einem ersten Leistungsanteil P_{AM1} und einem zweiten Leistungsanteil P_{AM2} zusammen. Der erste Leistungsanteil ist dabei der Teil, der erforderlich ist, um die Eigenwiderstände der Verbrennungskraftmaschine zu überwinden und diese mit Leerlaufdrehzahl betreiben zu können. Der zweite Leistungsanteil ist der Teil, welcher der Beschleunigung des Fahrzeuges oder dem Halten einer bestimmten konstanten Geschwindigkeit dient. Aus diesem kann im wesentlichen das an den Antriebsrädern erzeugten Moment M_{AR} abgeleitet werden. Dieser zweite von der Verbrennungskraftmaschine 2 aufgebrachte mechanische Leistungsanteil wird von der als Generator betreibbaren elektrischen Maschine 3 in elektrische Leistung umgewandelt, die wiederum dem Elektromotor 5 über die elektrische Kopplung 6, und damit den Antriebsrädern 4 zugeführt wird.

Ein Betätigungsorgan, beispielsweise in Form eines Fahrpedales- oder Hebels 7 oder eines anders gestalteten Stellelementes, mit welchem der Wunsch des Fahrers bezüglich eines bestimmten Fahrverhaltens zum Ausdruck gebracht werden kann, ist mit einem Leistungsstellglied 8 der Verbrennungskraftmaschine 2 gekoppelt. Als Leistungsstellglied fungiert dabei je nach Art der verwendeten Verbrennungskraftmaschine entweder eine Drosselklappe oder eine Einspritzeinrichtung, d.h. Elemente, die die zu verbrauchende Kraftstoffmenge beeinflussen. Bei Freigabe des Fahrpedalsoder Hebels 7 wird das Leistungsstellglied 8 der Verbrennungskraftmaschine 2 dahingehend verstellt, daß der Leerlaufbetrieb der Verbrennungskraftmaschine 2, d.h. die Leerlaufdrehzahl nₘₒₜₗₑₑᵣ gerade noch aufrechterhalten wird.

Um künstlich ein Schleppmoment M_{Schlepp} zu erzeugen, werden die die Antriebsräder antreibenden Elektromotoren 5 bei Freigabe des Fahrpedals 7 nach Beschleunigung oder Verzögerung im Generatorbetrieb betrieben und die generatorisch von den Elektromotoren 5 erzeugte und den Antriebsrädern entzogene Leistung wird dazu verwendet, die Verbrennungskraftmaschine 2 über die elektrische Kopplung 6 und die elektrischen Maschine 3, welche dann im Motorbetrieb betrieben wird, anzutreiben. Ziel ist es dabei, den Schiebebetrieb der Verbrennugskraftmaschine zu erreichen. Bei Fahrt im Gefälle besitzt das Fahrzeug nach Freigabe des Fahrpedalsoder Hebels 7 aufgrund der Hangabtriebskraft eine zunehmende kinetische Energie Eₖᵢₙ, woraus eine Zunahme des Fahrmomentes M_{Fahr} resultiert. Dies hätte bei zunehmender und vollständiger Umwandlung der an den Antriebsrädern anliegenden Leistung bzw. des Moments durch die generatorisch betriebenen Elektromotoren 5 in mechanisch, der Verbrennungskraftmaschine zugeführte Leistung, eine Zunahme des künstlich erzeugten Schleppmomentes dahingehend zur Folge, daß die Fahrgeschwindigkeit des Fahrzeuges aufgrund der Verringerung seiner kinetischen Energie immer weiter verringert wird, da an den Antriebsrädern 4 ein Bremsmoment erzeugt wird. Zur Vermeidung dieses Effektes wird erfindungsgemäß wenigstens bei Freigabe des Fahrpedal- bzw. Hebels 7 den generatorisch betriebenen Elektromotoren 5 nur soviel Leistung entnommen, die gerade ausreicht, um die Verbrennungskraftmaschine 2 zumindest in den Leerlaufbetrieb bzw. in einen Betriebszustand, bei welchen die Schubabschaltung erfolgt, zu bringen. Die Schubabschaltung erfolgt über die Motorsteuerung. Diese regelt dann die Kraftstoffzufuhr auf null, beispielsweise durch entsprechende Stellung des Füllnockens e.t.c.

In Analogie kann dies auch bei Fahrt in der Ebene realisiert werden. Dabei erfolgt bei Freigabe des Fahrpedals- oder Hebels 7 ebenfalls eine Rückstellung des Leistungsstellgliedes 8, so daß lediglich die Verbrennungskraftmaschine noch im Leerlauf betrieben wird. Auch hier wird dem Fahrzeug, insbesondere den Antriebsrädern 4, durch den generatorischen Betrieb der Elektromotoren 5 wenigstens ein erster Leistungsanteil entzogen, der gerade ausreichend ist, um Verbrennungskraftmaschine 2 in den Schiebebetrieb zu bringen. In der Regel ist dieser erste Leistungsanteil so gering, daß nur eine unmerkliche Verzögerung des Fahrzeuges bei Fahrt in der Ebene erzielt wird.
Dieser, den Antriebsrädern 4 zu entziehende erste Leistungsanteil steigt dabei bei sehr geringen Geschwindigkeiten mit Zunahme der Geschwindigkeit zuerst einmal an, bis eine bestimmte Geschwindigkeit erreicht ist, ab welcher eine Leistungsentnahme dahingehend erfolgen kann, daß immer eine Schubabschaltung erzielt und gleichzeitig die Fahrgeschwindigkeit nur unmerklich verringert wird.

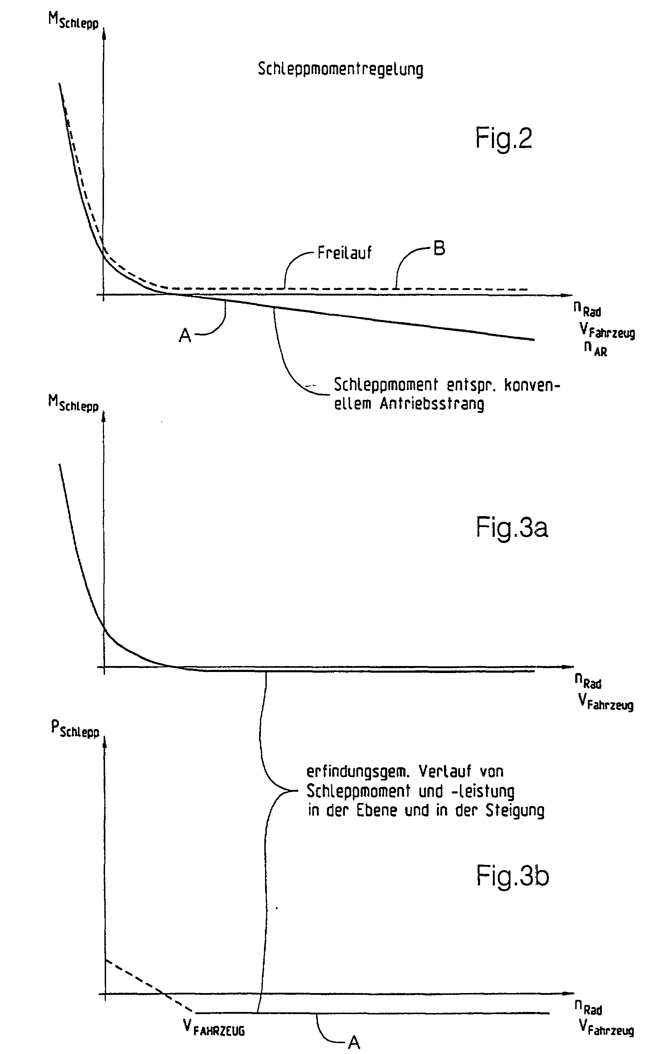

Die Figuren 2 und 3 verdeutlichen einander gegenüberstellend den Verlauf des Schleppmomentes bei konventionellen mechanischen Antriebssträngen und bei einem erfindungsgemäß betriebenen dieselelektrischen Antriebssystem. Der Schleppmomenten- und Leistungsverlauf M_{Schlepp} bzw. P_{Schlepp} sind dabei jeweils in einem Diagramm in Abhängigkeit von der Fahrgeschwindigkeit V_{Fahrzeug} bzw. der Drehzahl der Antriebsräder n_{AR} aufgetragen.

Aus Figur 2 wird ersichtlich, daß bei einem konventionellem Antriebsstrang aufgrund der mechanischen Kopplung zwischen Antriebsmaschine, d.h. Verbrennungskraftmaschine und den Antriebsrädern 4 mit zunehmend an den Rädern anliegenden Fahrmoment M_{Fahr} ein Steigen des Schleppmomentes M_{Schlepp} zu beobachten ist, denn die Verbrennungkraftmaschine 2 wird vom Abtrieb, d.h. den Antriebsrädern 4 her angetrieben. Mit Zunahme der kinetischen Energie des Fahrzeuges bei Fahrt im Gefälle erfolgt dann eine Zunahme des Schleppmomentes M_{Schlepp}, d.h. eine Vergrößerung der im Antriebsstrang zu überwindenden Widerstände. Im Ergebnis stellt sich eine Verlangsamung des Fahrzeuges aufgrund des Entzuges von kinetischer Energie ein. Bei Fahrt im Gefälle reicht dieses Schleppmoment jedoch zum Konstanthalten einer Geschwindigkeit oft nicht aus, und es müssen des weiteren zusätzliche Bremseinrichtungen eingesetzt werden, um ein Halten der Geschwindigkeit zu gewährleisten, was für den Fahrer die Betätigung weiterer Bremseinrichtungen bedeutet.

Demgegenüber ermöglicht die erfindungsgemäße Lösung eine Kraftstoffeinsparung ohne großen zusätzlichen konstruktiven und steuer- und regelungstechnischen Aufwand bei unmerklicher Verzögerung bei Fahrt in der Ebene und bei entsprechender Schleppmomentenregelung ein Konstanthalten der Fahrgeschwindigkeit bei Fahrt im Gefälle.

In den Figuren 3a und 3b sind die erfindungsgemäßen Verläufe des Schleppmomentes M_{Schlepp} und der Schleppleistung P_{Schlepp} in der Ebene und in der Steigung dargestellt.

Die Figuren 3a und 3b verdeutlichen, daß erfindungsgemäß mit zunehmender Fahrgeschwindigkeit zunächst ein zunehmendes Schleppmoment M_{Schlepp} bzw. eine Schleppleistung P_{Schlepp} erzeugt wird, welches ab einer bestimmten Geschwindigkeit V_{Fahrzeug-A} gerade ausreicht, um die Verbrennungskraftmaschine in den Schiebebetrieb zu bringen und damit die Schubabschaltung auszulösen. Ab dieser Fahrgeschwindigkeit wird mit deren Zunahme wenigstens immer nur dieses, zum Schiebebetrieb ausreichende Schleppmoment M_{Schlepp1} erzeugt.

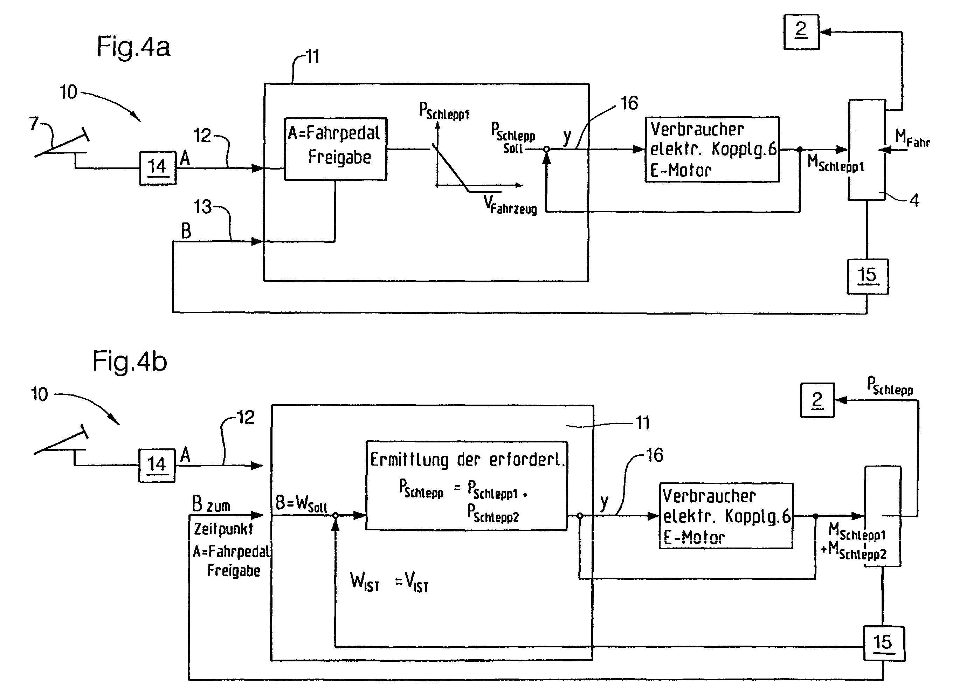

Die Figuren 4a bis 4c verdeutlichen anhand von Blockschaltbildern die zur erfindungsgemäßen Durchführung des Verfahrens erforderlichen Steuer-bzw. Regeleinrichtungen sowie deren Arbeitsweise. Für gleiche Elemente werden die gleichen Bezugszeichen verwendet.

Die Figur 4a verdeutlicht eine Regeleinrichtung 10. Diese verarbeitet wenigstens zwei Eingangsgrößen. Eine erste Eingangsgröße A wird von einer, den Betätigungszustand des Betätigungsorganes 7 und/oder einer Einrichtung zur Vorgabe des Fahrerwunsches, wenigstens mittelbar charakterisierenden Größe gebildet. Vorzugsweise ist die den Betätigungszustand des Betätigungsorganes 7 charakterisierende Größe die Winkelstellung des Fahrpedals- oder Hebels 7. Eine zweite Eingangsgröße B wird von einer den aktuellen Fahrzustand wenigstens mittelbar beschreibenden Größe zum Zeitpunkt der Freigabe des Betätigungsorganes 7 und/oder der Aktivierung bzw. Betätigung einer Einrichtung zur Vorgabe eines Fahrerwunsches gebildet. Diese Größe kann beispielsweise die aktuelle Fahrgeschwindigkeit vᵢₛₜ sein. Die Regeleinrichtung weist zu diesem Zweck wenigstens ein Steuergerät 11 mit wenigstens zwei Eingängen für die Eingangsgrößen A und B auf - einen ersten Eingang 12 und einen zweiten Eingang 13. Der erste Eingang 12 ist dazu mit einer Einrichtung 14 zur Erfassung des Betätigungszustandes des Betätigungsorganes 7 koppelbar. Der zweite Eingang ist mit einer Einrichtung 15 zur Erfassung einer den aktuellen Fahrzustand beschreibenden Größe verbindbar. Diese Einrichtung 15 kann beispielsweise als Drehzahlmeßeinrichtung ausgeführt sein.

In Abhängigkeit der den Fahrzustand wenigstens mittelbar charakterisierenden Größe B, vorzugsweise der Fahrgeschwindigkeit, wird ein zu erzeugendes Schleppmoment ermittelt. Dieses entspricht der dem Antriebsstrang, insbesondere den Antriebsrädern 4 zu entziehenden Leistung. Dabei ist zu beachten, daß bei sehr geringen Geschwindigkeiten eine Leistungsverminderung an den Antriebsrädern 4 noch nicht ausreichen würde, um die Verbrennungskraftmaschine in den Schiebebetrieb zu bringen. Des weiteren kann eine vollständige Leistungsverminderung zum vollständigen Abbremsen des Fahrzeuges führen, was nicht bezweckt ist. Daher erfolgt eine Schleppmomentenzuweisung dahingehend, daß bei geringen Geschwindigkeiten mit deren Zunahme ein zunehmendes Schleppmoment erzeugt wird, welches ab einer bestimmten Geschwindigkeit immer ausreicht, die Verbrennungskraftmaschine in den Schiebebetrieb zu bringen.
Das Steuer- bzw. Regelgerät weist dazu einen Ausgang 16 auf, der mit den Verbrauchern bzw. den Elektromotoren und/oder der elektrischen Kopplung 6 zum Zweck der Einstellung der den Antriebsrädern 4 zu entziehenden Leistung - wenigstens des ersten Leistungsanteiles P_{Schlepp1} - gekoppelt ist und an dem eine Stellgröße Y für die Einstellung eines bestimmten Schleppmomentes M_{Schlepp} bzw. einer bestimmten Schleppleistung P_{Schlepp} ausgegeben wird.

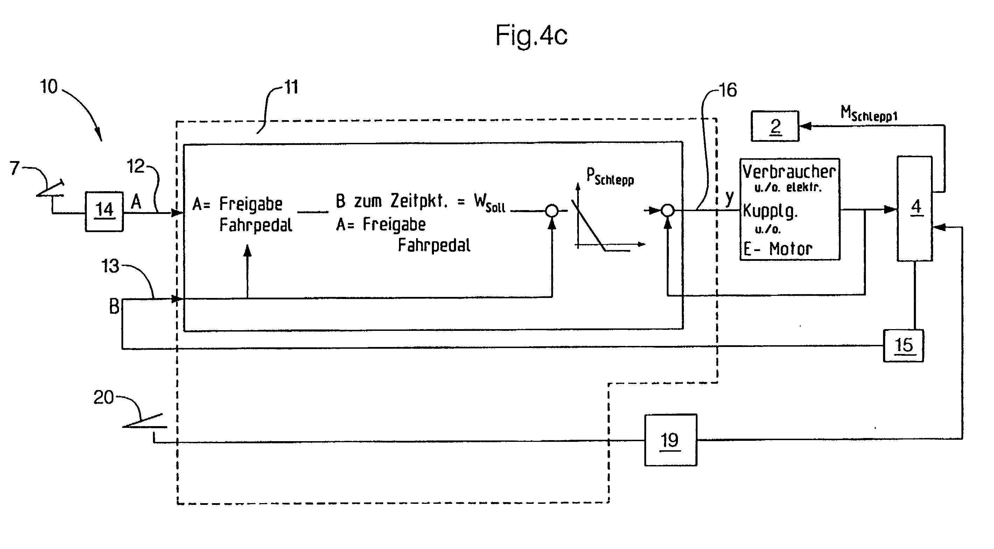

In der Figur 4b ist ein Blockschaltbild für eine Schleppmomentenregelung mit Funktion konstante Geschwindigkeit im Gefälle dargestellt. Die Regeleinrichtung 10 weist dazu die gleichen Eingänge A und B - wie in Figur 4a beschrieben - auf. Die zum Zeitpunkt der Betätigung der Einrichtung oder Freigabe des Fahrpedals- oder Hebels 7 ermittelte, den aktuellen Fahrzustand charakterisierende Größe wird als Führungsgröße W einer Regelung gesetzt. Diese Größe ist vorzugsweise eine aus der aktuellen Drehzahl zu diesem Zeitpunkt ermittelte Geschwindigkeit Wᵥₛₒₗₗ, kann aber auch eine Beschleunigung sein. Diese wird mittels der in der Regelstrecke enthaltenen Schleppmomentenregelung eingestellt, d.h. es erfolgt ein ständiger Vergleich der Führungsgröße Wᵥₛₒₗₗ mit dem fortlaufend ermittelten Istwert vᵢₛₜ. Überschreitet der Istwert den Sollwert wird entsprechend der Abweichung zwischen beiden Werten ein zur Erzeugung des zweiten Leistungsanteiles P_{Schlepp2}, welcher zum Abbremsen des Fahrzeuges genutzt werden soll, ermittelt und dementsprechend die zu erzeugende Gesamtschleppleistung und damit die gesamte, den Antriebsrädern zu entziehende Leistung durch den generatorischen Betrieb der Elektromotoren 4 eingestellt. Der zweite Leistungsanteil P_{Schlepp2} kann dabei in Wärme umgewandelt oder aber in einer Speichereinrichtung gespeichert werden.
Hierbei wird die Schleppmomentenregelung zur Regelung auf konstante Fahrgeschwindigkeit bei Fahrt im Gefälle eingesetzt und ist Bestandteil dieser. In einer weiteren Ausgestaltung entsprechend Figur 4c ist bei Vorhandensein einer weiteren Bremseinrichtung, hier mit 19 und deren Betätigungseinrichtung mit 20 bezeichnet, diese zusätzlich während der Schleppmomentenregelung aktivierbar. Es besteht dabei die Möglichkeit, die Schleppmomentenregelung in der zum Zeitpunkt der Betätigung der Bremseinrichtung bestehenden Einstellung bezüglich des einzustellenden Schleppmomentes zu belassen und zusätzlich mit der Bremseinrichtung ein entsprechend dessen Betätigung im Normalbetrieb zu erzeugendes Bremsmoment vermindert um das mit der Schleppmomentenregelung erzeugte Bremsmoment einzustellen. Eine andere denkbare Möglichkeit besteht darin, beide zu erzeugenden Momente miteinander zu addieren. Weiterhin wäre es auch denkbar, die Schleppmomentenregelung auf ein Moment entsprechend dem ersten Leistungsanteil P_{Schlepp1} zurückzuführen und das Bremsmoment allein mit der zusätzlichen Bremseinrichtung 19 zu erzeugen. Die Auswahl der Zuordnung beider Systeme zueinander und die Abstimmung hinsichtlich ihres Vorranges liegt im Ermessen des Fachmannes, weshalb diese im einzelnen nicht erläutert zu werden brauchen. Die nach Beendigung der Betätigung der Bremseinrichtung vorliegende Istgeschwindigkeit oder die den aktuellen Fahrzustand wenigstens mittelbar charakterisierende Größe wird dann dem Sollwerteingang der Regelung zugewiesen. Beiden - den Elektromotoren 5 und der Bremseinrichtung 19 ist dabei vorzugsweise die gleiche Steuer- und Regeleinrichtung 10 zugeordnet. Vorzugsweise werden die einzelnen Ansteuervorgänge über in der Steuer-bzw. Regeleinrichtung zu durchlaufende, programmierbare Funktionen realisiert. Das automatische Neusetzen bzw. Zuweisen des Sollwertes d.h. der Führungsgröße des Regelkreises kann beispielsweise mittels entsprechend programmierter Algorithmen erfolgen. Elektrische Schaltungen und logische Verknüpfungsglieder sind ebenfalls denkbar.

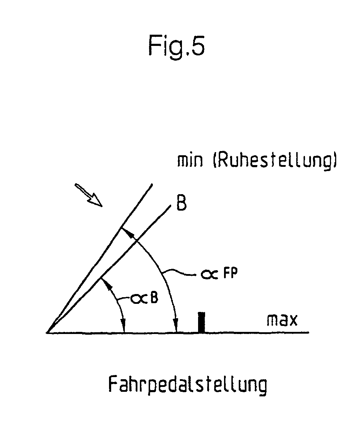

Figur 5 verdeutlicht eine vorteilhalfte Ausgestaltung zur Vermeidung eines sprungartigen Überganges zwischen Antriebsmoment und Schleppmoment bei Aktivierung der Schleppmomentenregelung oder zwischen Schleppmoment und Antriebsmoment bei Deaktivierung. Vorzugsweise sollte der Übergang gleitend erfolgen. Dieser kann mittels programmierbarer Funktionen realisiert werden. Des weiteren kann, wie in Figur 5 dargestellt, die Winkelverstellung am Betätigungsorgan, d.h. am Fahrpedal- oder Hebel 7 als Grundlage für die Realisierung eines gleitenden Überganges genutzt werden. Dabei wird ein bestimmter Fahrpedalwinkel alpha_{B}, welcher eine bestimmte Fahrpedalstellung B charakterisiert, die ungleich den möglichen Endstellungen Freigabe oder Niedertreten ist, dazu genutzt, die Verstellung des Leistungsstellgliedes 8 an der Verbrennungskraftmaschine 2 schon zu einem früheren Zeitpunkt, wenn das Fahrpedal 7 noch nicht vollständig freigegeben wurde, dahingehend vorzunehmen, daß die von der Verbrennungskraftmaschine erzeugte Antriebsleistung gleich Null wird und die Verbrennungskraftmaschine nur noch im Leerlaufbetrieb betrieben wird. Ab diesem Zeitpunkt bis zum Erreichen der Endstellung, welche die Freigabe des Fahrpedals signalisiert, erfolgt beispielsweise mittels einer programmierbaren Funktion ein allmählicher Übergang zum einzustellenden Schleppmoment.

## Patentansprüche

1. Verfahren zur Beeinflussung des Schleppmomentes in einem Antriebsstrang
- mit wenigstens einem, ein Antriebsrad (4) wenigstens mittelbar antreibenden Elektromotor (5);
- mit einer Verbrennungskraftmaschine (2);
- mit einer, mit der Verbrennungskraftmaschine (2) mechanisch koppelbaren als Generator und als Motor betreibbaren elektrischen Maschine (3);
- jeder Elektromotor (5) ist elektrisch mit dem Generator (3) koppelbar;
- mit einem, mit einem Stellglied (8) der Verbrennungskraftmaschine (2) wenigstens mittelbar gekoppelten Betätigungsorgan (7) und/oder einer Einrichtung zur Vorgabe eines Fahrerwunsches für die Bewegung des Fahrzeuges; wobei
1.1 die Elektromotoren (5) wenigstens bei Freigabe des Betätigungsorganes (7) und/oder bei Betätigung der Einrichtung zur Vorgabe eines Fahrerwunsches im Generatorbetrieb betrieben werden;
1.2 den Antriebsrädern (4) durch die Elektromotoren (5) ein erster generatorisch erzeugter Leistungsteil entzogen wird;
1.3 dieser erste Leistungsanteil der elektrischen Maschine (3) zum Antrieb der Verbrennungkraftmaschine (2) zugeführt wird;
**gekennzeichnet durch** die folgenden Merkmale:
1.4 der erste Leistungsanteil ist derart gewählt, daß die Verbrennungskraftmaschine (2) wenigstens mit einer Drehzahl, welche größer oder gleich der Leerlaufdrehzahl ist, und bei welcher mittels einer der Verbrennungskraftmaschine (2) zugeordneten Steuerung eine vollständige Unterbrechung der Kraftstoffzufuhr erfolgt, betrieben wird.

2. Verfahren nach Anspruch 1,
**gekennzeichnet durch** folgende Merkmale:
2.1 eine, den aktuellen Fahrzustand wenigstens mittelbar charakterisierende Größe wird wenigstens ab dem Zeitpunkt der Freigabe des Fahrpedals (7) oder der Betätigung der Einrichtung in wenigstens einer Vielzahl von bestimmbaren Zeitabschnitten ermittelt;
2.2 der ermittelte Wert der den Fahrzustand wenigstens mittelbar charakterisierenden Größe zum Zeitpunkt der Freigabe des Betätigungsorganes (4) und/oder der Betätigung der Einrichtung zur Vorgabe eines Fahrerwunsches betreffend den aktuellen Fahrzustand wird als Sollwert einer Regelung gesetzt;
2.3 der Sollwert wird mit dem Istwert verglichen;
2.4 bei Abweichung des Istwertes vom Sollwert dahingehend, daß der Istwert größer als der Sollwert wird, wird den Antriebsrädern (4) mittels der generatorisch betriebenen Elektromotoren (5) ein weiterer zweiter Leistungsanteil zur Erzeugung eines Bremsmomentes entzogen.

3. Verfahren nach Anspruch 2, **dadurch gekennzeichnet, daß** als die den aktuellen Fahrzustand wenigstens mittelbar charakterisierende Größe die Fahrgeschwindigkeit gewählt wird.

4. Verfahren nach Anspruch 2, **dadurch gekennzeichnet, daß** als die den aktuellen Fahrzustand wenigstens mittelbar beschreibende Größe die Beschleunigung gewählt wird.

5. Verfahren nach einem der Ansprüche 1 bis 4, **gekennzeichnet durch** folgende Merkmale:
5.1 es ist wenigstens eine weitere Bremseinrichtung aktivierbar;
5.2 wenigstens eine, den aktuellen Fahrzustand wenigstens mittelbar beschreibende Größe wird wenigstens ab dem Zeitpunkt der Deaktivierung der Bremseinrichtung in wenigstens einer Vielzahl von bestimmbaren Zeitabschnitten ermittelt;
5.3. die zum Zeitpunkt der Deaktivierung vorliegende Größe wird als neuer Sollwert einer Regelung gesetzt;
5.4 der Sollwert wird mit dem Istwert verglichen;
5.5 bei Abweichung des Istwertes vom Sollwert dahingehend, daß der Istwert größer als der Sollwert wird, wird den Antriebsrädern (4) mittels der generatorisch betriebenen Elektromotoren (5) ein weiterer zweiter Leistungsanteil zur Erzeugung eines Bremsmomentes entzogen.

6. Verfahren nach Anspruch 5, **dadurch gekennzeichnet, daß** bei Aktivierung wenigstens einer weiteren Bremseinrichtung die Schleppmomentenreglung dahingehend deaktiviert wird, daß die den Antriebsrädern zum Zeitpunkt der Aktivierung der Bremseinrichtung entzogenen Leistungsanteile unverändert weiter entzogen werden und zusätzlich ein Bremsmoment mit der Bremseinrichtung erzeugt wird.

7. Verfahren nach Anspruch 6, **dadurch gekennzeichnet, daß** der den Antriebsrädern entzogene zweite Leistungsanteil und das von der Bremseinrichtung erzeugte Bremsmoment einander additiv überlagert werden.

8. Verfahren nach Anspruch 6, **dadurch gekennzeichnet, daß** mit der Bremseinrichtung ein Bremsmoment erzeugt wird, welches sich aus der Differenz des entsprechend der Betätigung der Bremseinrichtung gewünschten Bremsmomentes und dem Moment entsprechend des zweiten Leistungsanteiles ergibt.

9. Verfahren nach Anspruch 5, **dadurch gekennzeichnet, daß** bei Aktivierung wenigstens einer weiteren Bremseinrichtung die Schleppmomentenreglung dahingehend deaktiviert wird, daß den Antriebsrädern ab dem Zeitpunkt der Aktivierung der Bremseinrichtung nur der erste Leistungsanteil entzogen wird und ein Bremsmoment lediglich mit der Bremseinrichtung erzeugt wird.

10. Verfahren nach Anspruch 5, **dadurch gekennzeichnet, daß** eine Maximalauswahl zwischen dem zum Zeitpunkt der Betätigung der Bremseinrichtung den Antriebsrädern (4) entzogenen zweiten Leistungsanteil und dem entsprechend der Betätigung der Bremseinrichtung gewünschten Bremsmoment erfolgt und dementsprechend das Bremsmoment entweder nur mit einem der beiden Systeme erzeugt wird.

11. Verfahren nach einem der Ansprüche 1 bis 10, **dadurch gekennzeichnet, daß** der Übergang vom Antriebs- zum Schleppmoment und umgekehrt frei von Sprüngen realisiert wird.

12. Verfahren nah Anspruch 11, **dadurch gekennzeichnet, daß** ab der Freigabe des Fahrpedals- oder Hebels (7) und/oder der Betätigung einer Einrichtung zur Vorgabe eines Fahrerwunsches zur Ansteuerung der Stellglieder zur Beeinflussung der den Antriebsrädern (4) zu entziehenden Leistung eine programmierte Routine durchlaufen wird.

13. Verfahren nach einem der Ansprüche 11 oder 12, **gekennzeichnet durch** folgende Merkmale:
13.1 am Betätigungsorgan wird eine bestimmte Stellung, welche ungleich einer der beiden Endstellungen ist, definiert;
13.2 bei Erreichen dieser bestimmten Stellung wird das Leistungstellglied der Verbrennungskraftmaschine (2) derart verstellt, daß die von der Verbrennungskraftmaschine (2) erzeugte Antriebsleistung gleich Null ist;
13.3 bei Überstreichen des Bereiches von dieser bestimmten Stellung bis zur Endstellung und umgekehrt wird das einzustellende Schleppmoment allmählich vergrößert bzw. verkleinert.

14. Verfahren nach Anspruch 13, **dadurch gekennzeichnet, daß** die Definition der Stellung ständig neu erfolgt.

15. Verfahren nach Anspruch 13, **dadurch gekennzeichnet, daß** die Definition der Stellung fest vorgebbar ist.

16. Verfahren nach einem der Ansprüche 11 bis 14, **dadurch gekennzeichnet, daß** der Übergang von Antriebs- zum Schleppmoment und umgekehrt in Abhängigkeit der Drehzahl der Verbrennungskraftmaschine (2) erfolgt.

17. Verfahren nach Anspruch 16, **dadurch gekennzeichnet, daß** bei einer bestimmbaren Abweichung zwischen der aktuellen Drehzahl der Verbrennungskraftmaschine (2) und der Drehzahl, ab welcher eine Schubabschaltung vomehmbar ist, der Übergang von und zur Schleppmomentenregelung verzögert erfolgt.

18. Antriebseinheit für ein Fahrzeug
18.1 mit wenigstens einem, ein Antriebsrad (4) wenigstens mittelbar antreibenden Elektromotor (5);
18.2 mit einer Verbrennungskraftmaschine (2);
18.3 mit einer, mit der Verbrennungskraftmaschine (2) mechanisch koppelbaren und als Motor und Generator betreibbaren elektrischen Maschine (3);
18.4 jeder Elektromotor (5) ist elektrisch mit der als Generator betreibbaren elektrischen Maschine (3) koppelbar (6);
18.5 mit einem, mit einem Stellglied (8) der Verbrennungskraftmaschine (2) wenigstens mittelbar koppelbaren Betätigungsorgan (7) und/oder einer Einrichtung zur Vorgabe eines Fahrerwunsches für die Bewegung des Fahrzeuges;
18.6 mit einer Steuer-bzw. Regeleinheit (10), umfassend eine Steuereinrichtung (11), mit wenigstens einem ersten Eingang (12) und einen Zweiten Eingang (13) und einem ersten Ausgang (16);
18.7 der erste Eingang (12) ist mit dem Betätigungsorgan (7) gekoppelt;
18.8 der zweite Eingang (13) ist mit wenigstens einer Erfassungseinrichtung (15) für eine den aktuellen Fahrzustand wenigstens mittelbar beschreibenden Größe gekoppelt; **dadurch gekennzeichnet, daß**
18.9 der erste Ausgang (16) mit wenigstens einem Stellglied zur Einregelung der den Antriebsrädern (4) im generatorischen Betrieb des Elektromotors (5) zu entziehenden Leistung und des der Verbrennungskraftmaschine (2) zuzuführenden ersten Leistunganteiles gekoppelt ist;
18.10 Mittel zur Ermittlung der Stellgrößen (Y) vorgesehen sind.

19. Antriebseinheit nach Anspruch 18, **dadurch gekennzeichnet, daß** das Mittel eine programmierbare Funktion ist.

20. Antriebseinheit nach Anspruch 18, **dadurch gekennzeichnet, daß** das Mittel eine elektronische Schaltung ist.

21. Antriebseinheit nach einem der Ansprüche 18 bis 20, **gekennzeichnet durch** folgende Merkmale:
21.1 die Regeleinrichtung umfaßt eine Vergleichseinrichtung zum Vergleich eines als Sollwert fungierenden vorgebbaren Wertes einer den aktuellen Fahrzustand charakterisierenden Größe mit dem aktuellen Istwert;
21.2 es ist wenigstens eine der Vergleichseinrichtung nachgeordnete Zuordnungseinrichtung, welche einen, den Antriebsrädern zusätzlich zu entziehenden weiteren zweiten Leistungsanteil ermittelt und ein Stellglied zur Einregelung der den Antriebsrädern (4) im generatorischen Betrieb des Elektromotors (5) zu entziehenden Gesamtleistung ansteuert, vorgesehen.

22. Antriebseinheit nach einem der Ansprüche 18 bis 21, **gekennzeichnet durch** folgende Merkmale:
22.1 es ist wenigstens eine weitere Bremseinrichtung (19) vorgesehen;
22.2 es sind Mittel vorgesehen, welche die Wertigkeit zwischen der Bremseinrichtung und der Regelung der den Antriebsrädern zu entziehenden Leistung vorgesehen.

23. Antriebseinheit nach Anspruch 22, **dadurch gekennzeichnet, daß** das Mittel eine programmierbare Funktion ist.

24. Antriebseinheit nach Anspruch 23, **dadurch gekennzeichnet, daß** das Mittel eine elektronische Schaltung ist.

25. Antriebseinheit nach einem der Ansprüche 21 bis 23, **dadurch gekennzeichnet, daß** zum Speichern des zweiten Leistungsanteiles eine Speichereinheit vorgesehen ist.

26. Antriebseinheit nach einem der Ansprüche 18 bis 25, **dadurch gekennzeichnet, daß** der Elektromotor (5) als Transversalflußmaschine ausgeführt ist.

27. Antriebseinheit nach einem der Ansprüche 18 bis 26, **dadurch gekennzeichnet, daß** die elektrische Maschine (3) als Transversalflußmaschine ausgeführt ist

## Claims

1. Method of influencing the drag moment in a power train
- with at least one electric motor (5) at least indirectly driving a driving wheel (4);
- with a combustion engine (2);
- with an electric engine (3), which can be mechanically coupled to the combustion engine (2) and operated as a generator and as a motor;
- each electric motor (5) can be electrically coupled to the generator (3);
- with an actuating mechanism (7), which can be at least indirectly coupled to a correcting unit (8) of the combustion engine (2) and/or a device for registering a the driver's wish for the vehicle to move, wherein
1.1 the electric motors (5) are operated in generator operation at least during release of the actuating mechanism (2) and/or during actuation of the device for registering a driver's wish;
1.2 a first power quota, generated by the generator, is taken from the driving wheels (4) by the electric motors (5);
1.3 this first power quota is supplied to the electric engine (3) for driving the combustion engine (2);
**characterised by** the following features:
1.4 the first power quota is chosen in such a way that the combustion engine (2) is operated at least at a rotational speed which is greater than or equal to the running idle rotational speed and at which by means of a control unit allocated to the combustion engine (2), complete interruption of the fuel supply takes place.

2. Method according to claim 1, **characterised by** the following features:
2.1 a dimension, at least indirectly characterising the current driving state, is ascertained at least from the time of the release of the driving pedal (3) or actuation of the device in at least a plurality of determinable time slots;
2.2 the ascertained value of the dimension at least indirectly characterising the driving state at the time of the release of the actuating mechanism (4) and/or actuation of the device for registering a driver's wish concerning the current driving state is set as the desired value of a control system;
2.3 the desired value is compared with the actual value;
2.4 if the actual value differs from the desired value to the effect that the actual value becomes greater than the desired value a further second power quota is taken from the driving wheels (4) by means of the electric motors (5) operated as a generator, to generate a braking moment.

3. Method according to claim 2, **characterised in that** the driving speed is chosen as the dimension at least indirectly characterising the current driving state.

4. Method according to claim 2, **characterised in that** the acceleration is chosen as the dimension at least indirectly describing the current driving state.

5. Method according to any one of claims 1 to 4, **characterised by** the following features:
5.1 at least one further braking device can be activated;
5.2 at least one dimension at least indirectly describing the current driving state is ascertained at least from the time of deactivation of the brake device in at least a plurality of determinable time slots;
5.3 the dimension existing at the time of deactivation is set as the new desired value of a control system;
5.4 the desired value is compared with the actual value;
5.5 if the actual value differs from the desired value to the effect that the actual value becomes greater than the desired value a further second power quota is taken from the driving wheels (4) by means of the electric motors (5) operated as a generator, to generate a braking moment.

6. Method according to claim 5, **characterised in that** during activation of at least one further braking device the drag moment control system is deactivated to the effect that the power quotas taken from the driving wheels at the time of activation of the braking device continue to be taken unchanged and a braking moment is additionally generated with the braking device.

7. Method according to claim 6, **characterised in that** the second power quota taken from the driving wheels and the braking moment generated by the braking device are additively superimposed on one another.

8. Method according to claim 6, **characterised in that** with the braking device a braking moment is generated which results from the difference between the braking moment desired corresponding to the actuation of the braking device and the moment corresponding to the second power quota.

9. Method according to claim 5, **characterised in that** during activation of at least one further braking device the drag moment control system is deactivated to the effect that only the first power quota is taken from the driving wheels from the time of activation of the braking device and a braking moment is generated only with the braking device.

10. Method according to claim 5, **characterised in that** a maximum selection takes place between the second power quota taken from the driving wheels (4) at the time of actuation of the braking device and the braking moment desired corresponding to actuation of the braking device, and correspondingly the braking moment is generated either *(sic)* with only one of the two systems.

11. Method according to any one of claims 1 to 10, **characterised in that** the transition from driving to drag moment and in reverse is carried out free of jumps.

12. Method according to claim 11, **characterised in that** from the release of the driving pedal or lever (7) and/or actuation of a device for registering a driver's wish to trigger the correcting units to influence the power to be taken from the driving wheels (4) a programmed routine is run through.

13. Method according to any one of claims 11 or 12, **characterised by** the following features:
13.1 a specific setting, which is unequal to either of the two final settings, is defined on the actuating mechanism;
13.2 when this specific setting is reached the power correcting unit of the combustion engine (2) is adjusted in such a way that the drive power generated by the combustion engine (2) is equal to zero;
13.3 the drag moment to be set is gradually increased or reduced by scanning the range from this specific setting to the final setting and in reverse.

14. Method according to claim 13, **characterised in that** the definition of the setting constantly takes place anew.

15. Method according to claim 13, **characterised in that** the definition of the setting can be definitely predetermined.

16. Method according to any one of claims 11 to 14, **characterised in that** the transition from drive to drag moment and in reverse takes place as a function of the rotational speed of the combustion engine (2).

17. Method according to claim 16, **characterised in that** if there is a determinable difference between the current rotational speed of the combustion engine (2) and the rotational speed from which a thrust termination can be performed, the transition from and to the drag moment control system takes place with a delay.

18. Drive unit for a vehicle
18.1 with at least one electric motor (5) at least indirectly driving a driving wheel (4)
18.2 with a combustion engine (2);
18.3 with an electric engine (3) which can be mechanically coupled to the combustion engine (2) and operated as a motor and generator;
18.4 each electric motor (5) can be coupled electrically to the electric engine (3) which can be operated as a generator;
18.5 with an actuating mechanism (7) which can be at least indirectly coupled to a correcting unit (8) of the combustion engine (2) and/or a device for registering a driver's wish for the vehicle to move;
18.6 with a control or regulating unit (10) comprising a control device (11) with at least one first input (12) and a second input (12) and a first output (16);
18.7 the first input (12) is coupled to the actuating mechanism (7);
18.8 the second input (13) is coupled to at least one detection device (15) for a dimension at least indirectly describing the current braking state, **characterised in that**
18.9 the first output (16) is coupled to at least one correcting unit for regulating the power to be taken from the driving wheels (4) in operation of the electric motor (5) as a generator and the first power quota to be supplied to the combustion engine (2);
18.10 means are provided for ascertaining the correcting variables (Y).

19. Drive unit according to claim 18, **characterised in that** the means is a programmable function.

20. Drive unit according to claim 18, **characterised in that** the means is an electronic circuit.

21. Drive unit according to any one of claims 18 to 20, **characterised by** the following features:
21.1 the regulating device comprises a comparison device for comparing a value of a dimension characterising the current driving state, which can be predetermined and acts as a desired value, with the current actual value;
21.2 at least one allocation device subordinate to the comparison device is provided, which ascertains a further second power quota to be additionally taken from the driving wheels and triggers a correcting unit for regulating the total power to be taken from the driving wheels (4) in operation of the electric motor (5) as a generator.

22. Drive unit according to any one of claims 18 to 21, **characterised by** the following features:
22.1 at least one further braking device (19) is provided;
22.2 means are provided, which [?] the valency between the braking device and the control system of the power to be taken from the driving wheels.

23. Drive unit according to claim 22, **characterised in that** the means is a programmable function.

24. Drive unit according to claim 23, **characterised in that** the means is an electronic circuit.

25. Drive unit according to any one of claims 21 to 23, **characterised in that** a memory unit is provided to store the second power quota.

26. Drive unit according to one of claims 18 to 25, **characterised in that** the electric motor (5) is constructed as a transversal flow machine.

27. Drive unit according to any one of claims 18 to 26, **characterised in that** the electric engine (3) is constructed as a transversal flow machine.

## Revendications

1. Procédé destiné à influencer le couple de glissement dans une ligne de transmission
- avec au moins un électromoteur (5) entraînant au moins indirectement une roue motrice ;
- avec un moteur à combustion interne (2) ;
- avec une machine électrique (3) apte à être couplée mécaniquement avec le moteur à combustion interne (2) et à être actionnée en générateur ou en moteur ;
- chaque électromoteur (5) est apte à être couplé électriquement avec le générateur (3) ;
- avec un organe de commande (7) couplé au moins indirectement avec un organe de réglage (8) du moteur à combustion interne (2) et/ou un dispositif de présentation d'un souhait du conducteur quant au déplacement du véhicule ;
dans lequel
1.1 les électromoteurs (5) sont actionnés en régime générateur au moins en cas de libération de l'organe de commande (7) et/ou lors de l'actionnement du dispositif de présentation d'un souhait du conducteur,
1.2 une première quantité de puissance produite par générateur est prélevée sur les roues motrices (4) par l'intermédiaire des électromoteurs (5),
1.3 cette première quantité de puissance est amenée à la machine électrique (3) pour entraîner le moteur à combustion interne (2),
**caractérisé par** les particularités suivantes :
1.4 la première quantité de puissance est choisie de manière que le moteur à combustion interne (2) soit entraîné à une vitesse supérieure ou égale à la vitesse à vide, vitesse à laquelle il se produit une interruption totale de l'alimentation en carburant au moyen d'une commande affectée au moteur à combustion interne (2).

2. Procédé selon la revendication 1,
**caractérisé par** les particularités suivantes :
2.1 une grandeur caractérisant au moins indirectement l'état de marche au moment considéré est déterminée au moins à partir de l'instant où la pédale d'accélérateur (7) est relâchée ou le mécanisme actionné, en au moins une pluralité d'intervalles de temps qui peuvent être déterminés,
2.2 la valeur déterminée de la grandeur caractérisant au moins indirectement l'état de marche du moment à l'instant de la libération de l'organe de commande (7) et/ou de l'actionnement du dispositif de présentation d'un souhait du conducteur relatif à l'état de marche au moment considéré, est posée comme valeur de consigne de réglage.
2.3 la valeur de consigne est comparée à la valeur réelle ;
2.4 en cas d'un écart entre la valeur réelle et la valeur de consigne, en ce sens que la valeur réelle est supérieure à la valeur de consigne, une seconde quantité de puissance additionnelle est prélevée sur les roues motrices (4) au moyen des électromoteurs (5) fonctionnant en générateur, afin de produire un couple de freinage.

3. Procédé selon la revendication 2, **caractérisé en ce que** la vitesse de marche est choisie comme grandeur caractérisant au moins indirectement l'état de marche au moment considéré.

4. Procédé selon la revendication 2, **caractérisé en ce que** l'accélération est choisie comme grandeur décrivant au moins indirectement l'état de marche au moment considéré.

5. Procédé selon l'une des revendications 1 à 4, **caractérisé par** les particularités suivantes :
5.1 il est prévu au moins un autre mécanisme de freinage apte à être actionné ;
5.2 au moins une grandeur décrivant au moins indirectement l'état de marche au moment considéré est déterminée au moins à partir de l'instant où le mécanisme de freinage est désactivé, en au moins une pluralité d'intervalles de temps pouvant être déterminés ;
5.3 la grandeur présente au moment de la désactivation est posée comme nouvelle valeur de consigne d'un réglage ;
5.4 la valeur de consigne est comparée avec la valeur réelle ;
5.5 en cas d'un écart entre la valeur réelle et la valeur de consigne, en ce sens que la valeur réelle est supérieure à la valeur de consigne, une deuxième quantité additionnelle de puissance est prélevée sur les roues motrices (4) au moyen des électromoteurs (5) fonctionnant en générateur, afin de produire un couple de freinage.

6. Procédé selon la revendication 5, **caractérisé en ce que** lors de l'activation d'au moins un autre mécanisme de freinage, le réglage du couple de glissement est désactivé, en ce sens que les quantités de puissance prélevées sur les roues motrices à l'instant de l'activation du mécanisme de freinage continuent d'être prélevées sans changement et qu'il se produise un couple de freinage supplémentaire avec le mécanisme de freinage.

7. Procédé selon la revendication 6, **caractérisé en ce que** la deuxième quantité de puissance prélevée sur les roues motrices et le couple de freinage produit par le mécanisme de freinage se superposent et s'additionnent.

8. Procédé selon la revendication 6, **caractérisé en ce qu'**il se produit avec le mécanisme de freinage un couple de freinage qui résulte de la différence entre le couple de freinage recherché correspondant à l'actionnement du mécanisme de freinage et le couple correspondant à la deuxième quantité de puissance.

9. Procédé selon la revendication 5, **caractérisé en ce que** lors de l'activation d'au moins un autre mécanisme de freinage, le réglage du couple de glissement est désactivé en ce sens que seule la première quantité de puissance est prélevée sur les roues motrices à partir de l'activation du mécanisme de freinage et qu'un couple de freinage n'est produit qu'avec le mécanisme de freinage.

10. Procédé selon la revendication 5, **caractérisé en ce qu'**il est fait un choix maximal entre la deuxième quantité de puissance prélevée sur les roues motrices (4) à l'instant de l'activation du mécanisme de freinage et le couple de freinage recherché correspondant à l'actionnement du mécanisme de freinage, et que par conséquent le couple de freinage est produit seulement avec l'un ou l'autre des deux systèmes.

11. Procédé selon l'une des revendications 1 à 10, **caractérisé en ce que** le passage du couple d'entraînement au couple de glissement et inversement s'effectue sans à coups.

12. Procédé selon la revendication 11, **caractérisé en ce que** dès l'instant de la libération de la pédale d'accélérateur ou du levier (7) de vitesse et/ou d'actionnement d'un dispositif de présentation d'un souhait du conducteur pour commander les organes de réglage pour influencer la puissance à prélever sur les roues motrices (4), une routine programmée est déroulée.

13. Procédé selon l'une des revendications 11 ou 12, **caractérisé par** les particularités suivantes :
13.1 une position déterminée qui n'est pas l'une des deux positions extrêmes, est définie au niveau de l'organe de commande ;
13.2 lorsque cette position déterminée est atteinte, l'organe de réglage de puissance du moteur à combustion interne (2) est réglé de telle sorte que la puissance d'entraînement produite par le moteur à combustion (2) interne soit égale à zéro ;
13.3 lors du balayage du domaine allant de cette position déterminée à la position extrême et inversement, le couple de glissement à régler est progressivement augmenté ou réduit.

14. Procédé selon la revendication 13, **caractérisé en ce que** la définition de la position est constamment renouvelée.

15. Procédé selon la revendication 13, **caractérisé en ce que** la définition de la position peut être prédéfinie de manière fixe.

16. Procédé selon l'une des revendications 11 à 14, **caractérisé en ce que** le passage du couple d'entraînement au couple de glissement et inversement s'effectue en fonction de la vitesse du moteur à combustion interne (2).

17. Procédé selon la revendication 16, **caractérisé en ce que** lors d'un écart que l'on peut déterminer, entre la vitesse du moteur à combustion interne (2) au moment considéré et la vitesse à partir de laquelle une coupure d'alimentation en poussée peut être entreprise, le passage du, ou vers le, réglage du couple de glissement s'effectue de manière différée.

18. Unité d'entraînement pour un véhicule :
18.1 avec au moins un électromoteur (5) entraînant au moins indirectement une roue motrice (4) ;
18.2 avec un moteur à combustion interne (2) ;
18.3 avec une machine électrique (3) apte à être couplée mécaniquement avec le moteur à combustion interne (2) et apte à être actionnée en générateur ou en moteur ;
18.4 chaque électromoteur (5) est apte à être couplé électriquement avec la machine électrique (3) qui peut être actionnée en générateur ;
18.5 avec un organe de commande (7) pouvant être couplé au moins indirectement avec un organe de réglage (8) du moteur à combustion interne (2) et/ou un dispositif de présentation d'un souhait du conducteur quant au déplacement du véhicule ;
18.6 avec une unité de réglage (10) ou de commande comprenant un dispositif de commande (11) avec au moins une première entrée (12), une deuxième entrée (13) et une première sortie (16) ;
18.7 la première entrée (12) est couplée avec l'organe de commande (7) ;
18.8 la deuxième entrée (13) est couplée avec au moins un dispositif d'enregistrement (15) d'une grandeur décrivant au moins indirectement l'état de marche au moment considéré ;
**caractérisé en ce que** :
18.9 la première sortie (16) est couplée au moins avec un organe de réglage destiné à régler à la fois la puissance à prélever sur les roues motrices (4) en régime générateur de l'électromoteur (5) et la première quantité de puissance à apporter au moteur à combustion interne (2) ;
18.10 il est prévu des moyens de détermination des grandeurs de réglage (Y).

19. Unité d'entraînement selon la revendication 18, **caractérisée en ce que** le moyen est une fonction programmable.

20. Unité d'entraînement selon la revendication 18, **caractérisée en ce que** le moyen est un circuit électronique.

21. Unité d'entraînement selon l'une des revendications 18 à 20, **caractérisée par** les particularités suivantes :
21.1 le dispositif de réglage comprend un dispositif de comparaison pour comparer une valeur pouvant être préétablie et servant de valeur de consigne pour une grandeur caractérisant l'état de marche au moment considéré, avec la valeur réelle au moment considéré ;
21.2 il est prévu au moins un dispositif de coordination subordonné au dispositif de comparaison qui détermine une nouvelle quantité de puissance additionnelle à prélever encore sur les roues motrices et qui commande un organe de réglage destiné au réglage de la puissance totale à prélever sur les roues motrices (4) lorsque l'électromoteur (5) est en régime générateur.

22. Unité d'entraînement selon l'une des revendications 18 à 21 **caractérisée par** les particularités suivantes :
22.1 il est prévu au moins un autre mécanisme de freinage (19) ;
22.2 il est prévu des moyens qui prévoient l'ordre de préférence entre le mécanisme de freinage et le réglage de la puissance à prélever sur les roues motrices.

23. Unité d'entraînement selon la revendication 22 **caractérisée en ce que** le moyen est une fonction programmable.

24. Unité d'entraînement selon la revendication 23 **caractérisée en ce que** le moyen est un circuit électronique.

25. Unité d'entraînement selon l'une des revendications 21 à 23, **caractérisée en ce qu'**il est prévu une unité de stockage pour le stockage de la deuxième quantité de puissance.

26. Unité d'entraînement selon l'une des revendications 18 à 25, **caractérisée en ce que** l'électromoteur (5) est conçu comme une machine à flux transversal.

27. Unité d'entraînement selon l'une des revendications 18 à 26, **caractérisée en ce que** la machine électrique (3) est conçue comme une machine à flux transversal.
